# EUROPEAN PATENT APPLICATION

(11) **EP 4 679 894 A1**
(43) Date of publication of application: **14.01.2026**
(21) Application number: 25187735.3
(22) Date of filing: 07.07.2025
(51) Int. Cl.: H04W 40/22

(54) **METHOD AND DEVICE FOR PROCESSING DATA THROUGH MULTI-HOP SIDELINK RELAY OPERATION**

(30) Priority: 08.07.2024 KR 20240089854; 12.06.2025 KR 20250077360
(71) Applicant: KT Corporation, Seongnam-si, Gyeonggi-do 13606 (KR)
(72) Inventor: HONG, Sung Pyo, 13606 Seongnam-si Gyeonggi-do (KR)
(74) Representative: Santarelli

(57) **Abstract**

Provided are a method and device for controlling a data processing operation using radio relay technology. The method for data processing of an intermediate relay user equipment (UE) includes receiving configuration information for processing data for a remote UE from a parent relay UE, controlling transfer of sidelink relay adaptation protocol (SRAP) data received from a receiving part of an SRAP entity on a PC5 interface to a transmitting part of the SRAP entity on the PC5 interface, and determining an egress link or an egress RLC channel for transmitting the data to a child relay UE based on the configuration information.

## Description

### CROSS-REFERENCE TO RELATED APPLICATION

This application claims priority from Korean Patent Application Nos. 10-2024-0089854, filed on July 8, 2024, and 10-2025-0077360, filed on June 12, 2025, which are hereby incorporated by reference for all purposes as if fully set forth herein.

### BACKGROUND

### Field

The disclosure relates to a technology for controlling a data processing operation using a wireless relay technology.

### Description of Related Art

The new radio (NR) sidelink relay operation is configured to support sidelink relay for various services, such as Vehicle to Everything (V2X), public safety, and commercial application.

However, the sidelink relay operation supported only a single hop sidelink relay operation. This single hop sidelink relay operation, where only one relay UE is present between a base station and a UE, may have limited applicability in applications due to the inherent characteristics of relay-based communication.

In environments where relay operation is practically necessary, such as when the coverage of a base station is exceeded, support for a multi-hop relay operation is required. Particularly, there is a need to support multi-hop relay operation using sidelink communication.

### BRIEF SUMMARY

The disclosure provides a data processing method and device through multi-hop-based sidelink relay technology.

In an aspect, the disclosure may provide a method for data processing of an intermediate relay user equipment (UE) providing a multi-hop relay operation in a sidelink network. The method may include receiving configuration information for processing data for a remote UE from a parent relay UE, controlling to transfer sidelink relay adaptation protocol (SRAP) data received from a receiving part of an SRAP entity on a PC5 interface to a transmitting part of the SRAP entity on the PC5 interface, and determining an egress link or an egress RLC channel for transmitting the data to a child relay UE based on the configuration information.

In another aspect, the disclosure may provide a method for data processing of a last relay UE providing a multi-hop relay operation in a sidelink network. The metho may include receiving configuration information for processing data for a remote UE from a base station, controlling to transfer sidelink relay adaptation protocol (SRAP) data received from a receiving part of an SRAP entity on a Uu interface to a transmitting part of the SRAP entity on a PC5 interface, for downlink data, and determining an egress link or an egress RLC channel for transmitting the downlink data to a child relay UE based on the configuration information.

In another aspect, the disclosure may provide an intermediate relay UE performing data processing by providing a multi-hop relay operation in a sidelink network. The intermediate relay UE may include a receiver receiving configuration information for processing data for a remote UE from a parent relay UE, and a controller controlling to transfer sidelink relay adaptation protocol (SRAP) data received from a receiving part of an SRAP entity on a PC5 interface to a transmitting part of the SRAP entity on the PC5 interface and determining an egress link or an egress RLC channel for transmitting the data to a child relay UE based on the configuration information.

In another aspect, the disclosure may provide a last relay UE performing data processing by providing a multi-hop relay operation in a sidelink network. The last relay UE may include a receiver receiving configuration information for processing data for a remote UE from a base station, and a controller controlling to transfer sidelink relay adaptation protocol (SRAP) data received from a receiving part of an SRAP entity on a Uu interface to a transmitting part of the SRAP entity on a PC5 interface, for downlink data, and determining an egress link or an egress RLC channel for transmitting the downlink data to a child relay UE based on the configuration information.

According to the embodiments of the disclosure, a data processing method and device may be provided through multi-hop-based sidelink relay technology.

### DESCRIPTION OF DRAWINGS

The above and other aspects, features, and advantages of the disclosure will be more apparent from the following detailed description taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure.
FIG. 3 is a view for explaining resource grids supported by a radio access technology in accordance with embodiments of the disclosure;
FIG. 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a view illustrating a configuration of a multi-hop relay according to an embodiment;
FIG. 9 is a view illustrating operations of an intermediate relay UE according to an embodiment;
FIG. 10 is a view illustrating operations of a last relay UE according to an embodiment;
FIG. 11 is a view illustrating a configuration of an intermediate relay UE according to an embodiment; and
FIG. 12 is a view illustrating a configuration of a last relay UE according to an embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

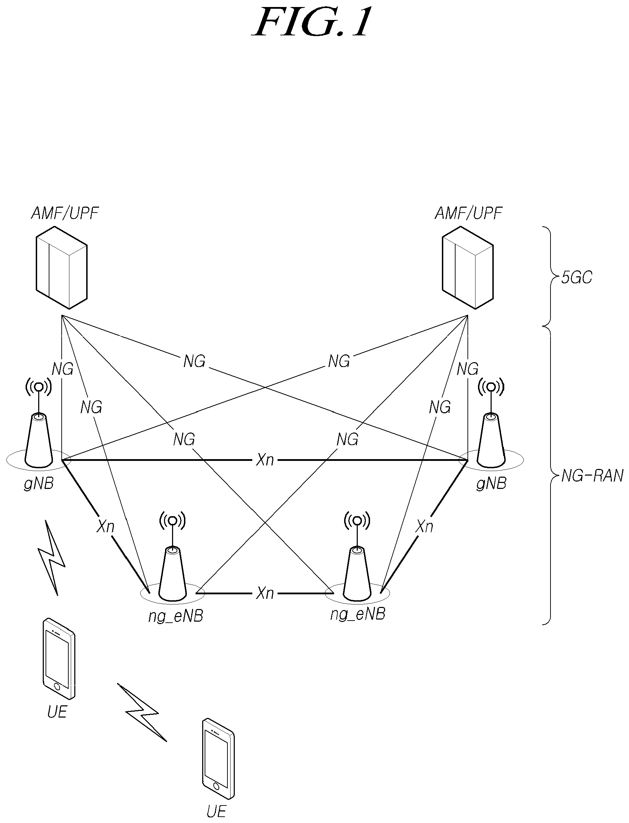

FIG. 1 is a view schematically illustrating an NR system applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

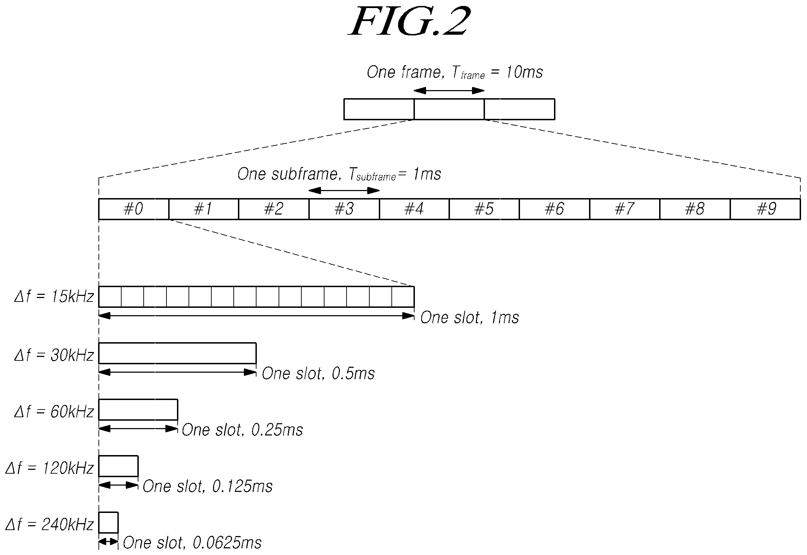

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

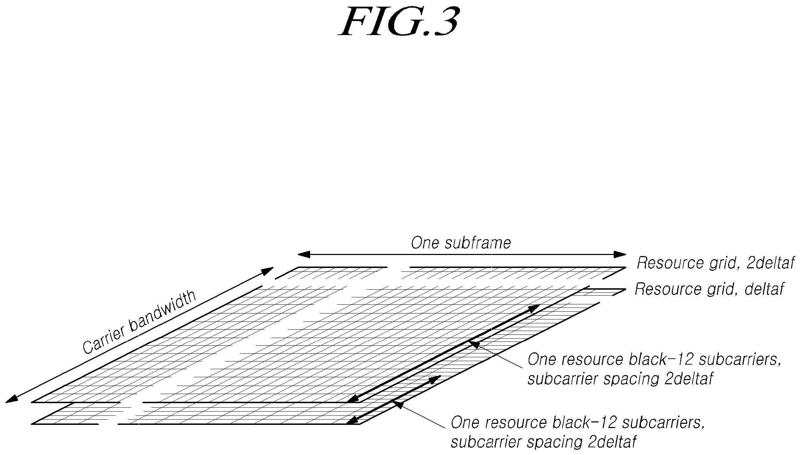

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

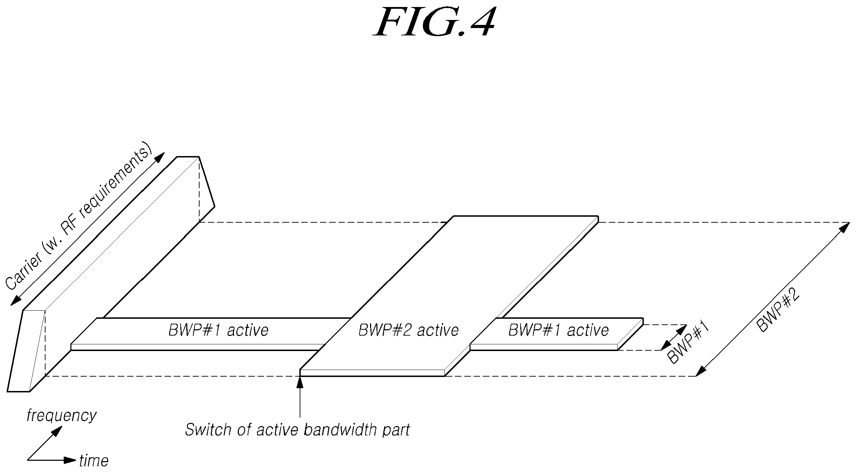

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

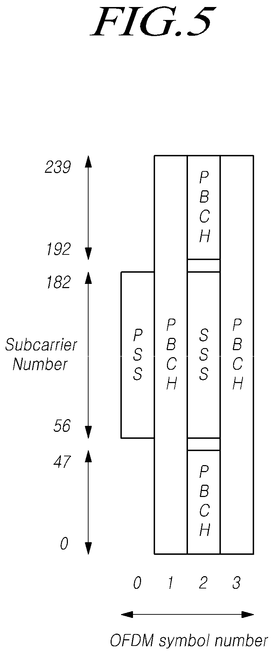

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

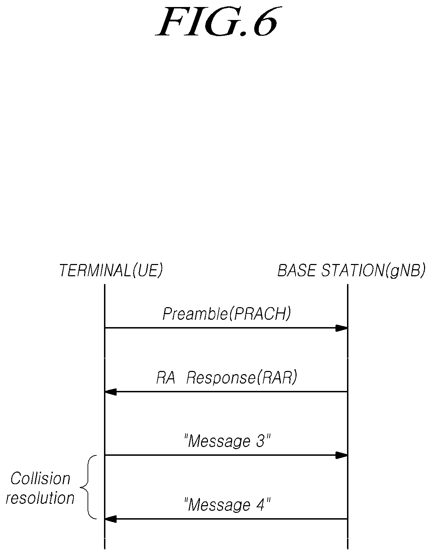

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

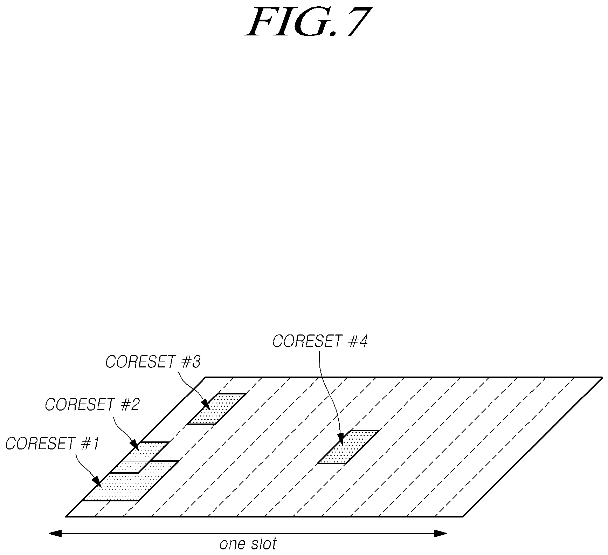

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as having meanings used in the past, present, or potentially in the future.

The disclosure relates to a data processing control method and device for supporting a multi-hop sidelink relay.

In 3GPP, through standardization of NR sidelink relay items in Rel-17 and Rel-18, the relay function based on NR sidelink has been standardized. This made it possible to support sidelink relay in V2X, public safety, commercial application services, or the like. However, the conventional NR sidelink relay was limited to a single hop relay. Thus, its applicability in applications was limited. To address this, functionality to support multi-hop relay is needed, but corresponding standardization efforts have not yet been completed. In particular, no specific methods have been provided for processing data based on a multi-hop sidelink.

Conceived to address the foregoing issues, the present embodiments propose a relay UE data processing method and device for transmitting/receiving data to/from a base station through an NR sidelink-based multi-hop relay UE.

Hereinafter, a data processing method based on 5GS/NR technology is described. However, this is for convenience of description and the present embodiments may also be applied based on any system/radio access technology (e.g., LTE, 6G). Embodiments described in the disclosure include information elements specified in the NR/5GS standards (e.g., TS 38.321 as a MAC standard, TS 38.331 as an NR RRC standard, and TS 23.501 as a system structure standard) and associated operational procedure. Although the disclosure does not contain the content of the UE operation related to the definitions for the corresponding information elements, the content set forth in the standards may be incorporated in the disclosure.

Any function described below is defined as an individual-UE capability (UE radio capability or UE core network capability) and may be transmitted by the UE/device to the base station/core network entity (e.g. AMF/SMF) through corresponding signaling. Alternatively, one or more of the functions described may be combined/merged to be defined as the corresponding UE capability and transmitted to the base station/core network entity through corresponding signaling by the UE.

The base station may transmit/indicate information for allowing/supporting/configuring the corresponding function/function combination for any function or any function combination, described below, to the UE through any downlink message (e.g., an RRC message, MAC control element, MAC PDU, or system information). For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The base station may transmit/indicate information for limiting/controlling any function described below, to the UE through any downlink message (e.g., an RRC message, MAC control element, or MAC PDU). For example, the prohibit timer of the corresponding function may be indicated. The corresponding prohibit timer may be start/restarted before or when the corresponding function is initiated. While the corresponding timer is running, the UE may limit/control the corresponding function not to he initiated/executed. For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The embodiments and corresponding functions described below may be performed individually and independently. The embodiments and related operations described below may be performed in combination with any embodiment and related operations, and it is obvious that they are also included in the scope of present embodiments. Any embodiment and related operations may be performed in any order.

Any information described below may be traffic characteristic information (e.g., any statistics/statistical quantity such as expected value/average, deviation, standard deviation minimum, maximum, etc.) statistically/empirically obtained/calculated/derived by the UE/network. Therefore, any information included herein may indicate one or more of the average (expected value)/minimum/maximum/standard deviation values. This is for convenience of description, and all of the information in the disclosure may be used as statistical information. Any information described below may be information preconfigured in the UE/network or provisioned through OAM/application server/application function/UDM.

In NR technology, two UEs (i.e., remote UE and relay UE) are defined to support single hop sidelink relay. Here, the remote UE (U2N: UE-to-Network remote UE) is an UE that communicates with the network through a U2N relay UE. (a UE that communicates with the network via a U2N Relay UE.). The U2N relay UE is a device that provides functionality to support connectivity to a base station for a U2N remote UE. (a UE that provides functionality to support connectivity to the network for U2N Remote UE(s).) In order to indicate the UE capability (UE capability) for two UEs, a relay UE operation capability (relayUE-Operation-L2-r17) and the remote UE operation capability (remoteUE-Operation-L2-r17) have been defined.

A sidelink relay was supported only through a single hop sidelink relay UE. Therefore, a UE operating as a sidelink remote UE could not provide the sidelink relay UE function at a time/simultaneously. A sidelink relay UE provided a U2N relay discovery service to allow discovery by the remote UE, access to a 5G system as a single UE, and a unicast traffic relay function between the remote UE and a base station. A single-hop sidelink relay was provided through one sidelink relay (e.g., a U2N relay UE) between the remote UE and a base station. For convenience of description, hereinafter, an L2/L3 U2N remote UE (or End UE) that intends to connect to one or more sidelink relay-based networks is referred to as a remote UE.

A multi-hop sidelink relay should provide relaying through a plurality of sidelink-based relay UEs between the remote UE and a base station. Therefore, it may be difficult to provide multi-hop operation with only the sidelink relay UE (or its function) of the prior art. In order to support a multi-hop sidelink relay, a sidelink-based relay UE (or its function or functional entity) needs to be separately defined.

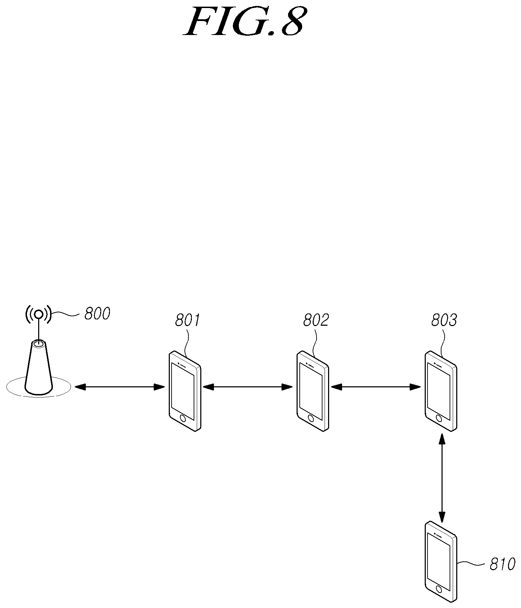

FIG. 8 is a view illustrating a multi-hop relay according to an embodiment.

Referring to FIG. 8, the multi-hop relay refers to a network where two or more relay UEs 801, 802, 803 transfer data over communication links between a base station 800 and the remote UE 810.

Among the two or more relay UEs, a relay UE 801 associated with the base station through a Uu interface may be described as a last relay UE. For example, a sidelink relay UE connected to the base station 800 through the Uu interface and connected to another sidelink relay UE through a PC5 interface is described as a last relay UE 801.

One or more sidelink relay UEs 802, 803 positioned between the last relay UE 801 and the remote UE 810 are described as intermediate relay UEs. Further, among the sidelink relay UEs, a relay UE that is first connected to the remote UE 810 is described as the first relay UE 803.

In other words, the last relay UE 801 refers to a relay UE connected to the base station. The intermediate relay UE refers to a relay UE positioned between the last relay UE 801 and the remote UE 810. Among the intermediate relay UEs, a UE that is first connected to the remote UE 810 may be more specifically described as the first relay UE.

For example, a sidelink relay UE may be divided into two relay UEs/functions. For example, a sidelink relay UE connected to the base station through a Uu interface and connected to another sidelink relay through the PC5 interface is referred to as the last relay UE for convenience of description. This is for convenience of description and may be replaced with any other name (e.g., PC5-Uu relay UE, L2 PC5-Uu U2N relay UE, terminal relay, top-level relay, parent relay, etc.). One or more sidelink relay UEs positioned between the last relay UE and the remote UE may be denoted as an intermediate relay UE (type 1) for convenience of description. This is for convenience of description and may be replaced with any other name.

As another example, it may be divided into three relay UE functions. For example, a sidelink relay UE connected to the base station through a Uu interface and connected to another sidelink relay through a PC5 interface (last relay UE), a sidelink relay UE directly connected to the remote UE through a PC5 interface (for convenience of description, referred to as the first relay UE). This is for convenience of description and may be replaced with any other name such as access relay, relay, lowest-level relay, child relay, etc.), and one or more sidelink relay UEs positioned between the last relay UE and the first relay UE (for convenience of description, referred to as intermediate relay UE (type 2), which may be replaced with any other name) may be separately defined.

The last relay UE may be connected to the base station through a Uu interface and also connected to another sidelink relay UE through a PC5 interface. The last relay UE may provide connectivity to a network (e.g., a base station) for remote UEs directly/indirectly connected to the last relay UE. Here, a direct connection between the last relay UE and the remote UE indicates that the remote UE is directly connected to the relay UE through a PC5 interface.

For example, it indicates a connection from the remote UE to the last relay UE. An indirect connection between the last relay UE and the remote UE indicates that the remote UE is connected to the relay UE through one or more sidelink relay UEs. For example, it indicates a connection such as remote UE-intermediate relay UE-last relay UE, remote UE-first relay UE-intermediate relay UE-last relay UE, etc. The last relay UE may initiate/trigger/perform the operation(s) when positioned in the base station coverage to provide connectivity to the base station for remote UEs directly/indirectly connected to the last relay UE. For example, in the case where the last relay UE moves out of coverage, Uu RLF, RRC connection failure, etc., the last relay may be instructed to direct the relevant information to directly/indirectly connected remote UEs and/or intermediate relay UEs and/or first relay UE.

An intermediate relay UE (type 1) or an intermediate relay UE (type 2) only differs in whether the sidelink relay UE is divided into two types or three types, but it may be directly/indirectly connected to the last relay UE to provide connectivity to a network (e.g., a base station) for remote UEs directly/indirectly connected to the intermediate relay UE (through the last relay). Hereinafter, for convenience of description, the intermediate relay UE (type 1) or the intermediate relay UE (type 2) is referred to as an intermediate relay UE. The intermediate relay UE may be configured to operate as an intermediate relay UE (type 1). For instance, the first relay UE may also serve as an intermediate relay UE. The corresponding UE type information may be set to the same value.

The intermediate relay UE may be configured to operate as an intermediate relay UE (type 2). For example, the intermediate relay UE may be a relay UE distinguished from the first relay UE. The corresponding UE type information may be set to a different value.

The first relay UE may be (directly) connected to the remote UE through a PC5 interface and connected to one of the intermediate relay UE, the last relay UE, or the base station. For example, based on SL-RSRP/SD-RSRP measurements for the relay UE or RSRP measurements for the base station cell, the relay UE or the cell may be selected for connection. When the first relay UE is directly connected to the base station, it may provide the last relay UE function.

The last relay UE may connect with remote UE(s) in its sidelink coverage. For example, it may connect as remote UE-last relay UE-base station. In such a case, the last relay UE may operate similarly to a single-hop relay UE of the prior art. The intermediate relay UE may connect with remote UE(s) in its sidelink coverage. For example, it may connect as remote UE-intermediate relay UE-last relay UE-base station. Thus, assuming that all types of sidelink relay UEs are directly connected to remote UEs, the last relay UE and the intermediate relay UE may provide a first remote UE function (e.g., first hop remote UE connection). In such cases, the sidelink relay UE may be processed by distinguishing between two relay UEs/functions (i.e., the last relay UE and the intermediate relay UE).

One sidelink relay UE may be configured to support only one UE function at a time, either the intermediate relay UE function or the last relay UE function. One sidelink relay UE may be configured not to provide both the intermediate relay UE function and the last relay UE function at once/simultaneously. The UE operating as the last relay UE in one cell may be configured not to operate as an intermediate relay UE in the cell. The UE operating as the last relay UE in one cell may be configured not to operate as an intermediate relay UE in another cell. For example, when the intermediate relay UE detects a PC5-RLF on the PC5 interface with a previous last relay UE, the intermediate relay UE may connect to the base station through cell reselection (after releasing the PC5 connection with the previous last relay UE). In such a case, the intermediate relay UE may be configured to operate as the last relay UE. The base station may indicate the corresponding configuration to allow the intermediate relay UE to operate as the last relay UE.

Meanwhile, it may also be configured to provide the sidelink relay UE function to the UE operating as a remote UE according to the multi-hop sidelink support, at a time/simultaneously. For example, if the remote UE is a UE capable of intermediate relay UE function (e.g., intermediated relay capable UE), the remote UE may perform any intermediate relay UE operation (described in the disclosure). For example, the data/traffic of the remote UE may be transmitted to the base station through one or more sidelink relay UEs. The remote UE operates as a sidelink relay UE and may transmit its own data/traffic and that of the remote UE connected to the corresponding UE to the base station through one or more sidelink relay UEs.

For convenience of description, the following description is based on a three-hop relay connection of "remote UE-first relay UE-intermediate relay UE-last relay UE-base station." As described above, the first relay UE may serve as the intermediate relay UE. In such a case, the three-hop relay connection may be connected as "remote UE-first intermediate relay UE-second intermediate relay UE-last relay UE-base station." While the description is based on "remote UE-first relay UE-intermediate relay UE-last relay UE-base station" for convenience, it is evident that processing based on relay UE roles (e.g., last relay UE and intermediate relay UE) as "remote UE-first intermediate relay UE-second intermediate relay UE-last relay UE-base station" is also in the scope of the disclosure.

Meanwhile, for convenience of description, the relay node closer to the remote UE among two sidelink relay nodes connected through the PC5 interface is referred to as a lower relay UE, and the relay node closer to the base station is referred to as an upper relay UE. This is also for convenience of description, and a lower relay UE may be replaced with any other name, such as a downlink relay UE or a child relay UE. Similarly, an upper relay UE may be replaced with any other name, such as an uplink relay UE or a parent relay UE.

For example, out of two relay UEs connected through the PC5 interface, the relay UE with fewer hops for connection to the base station (or more hops for connection to the remote UE) becomes the upper relay UE. The relay UE with more hops for connection to the base station (or fewer hops for connection to the remote UE) becomes the lower relay UE.

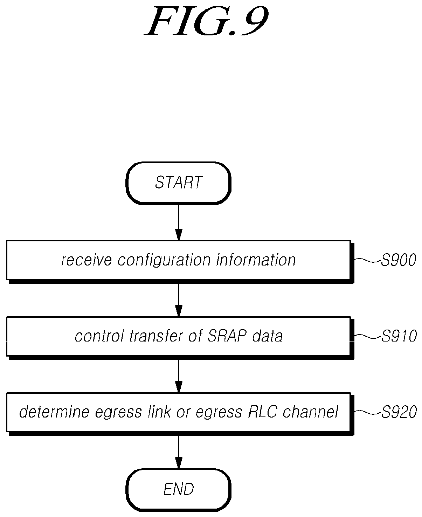

FIG. 9 is a flowchart illustrating operations of an intermediate relay UE according to an embodiment.

Referring to FIG. 9, a method for data processing of an intermediate relay user equipment (UE) providing a multi-hop relay operation in a sidelink network may include receiving configuration information for processing data for a remote UE from a parent relay UE (S900)

For example, the intermediate relay UE may be configured to perform relay UE operations and remote UE operations simultaneously. The intermediate relay UE may include a relay UE function for relaying data between the remote UE and the parent UE. Further, the intermediate relay UE may include the remote UE function for operating as the remote UE.

The intermediate relay UE may operate as the remote UE to transfer or receive data to/from a higher relay UE. Further, the intermediate relay UE may operate as a relay UE to transfer or receive data to/from a lower relay UE or the remote UE.

The intermediate relay UE may receive a sidelink RRC message from the parent relay UE. The parent relay UE, which is a relay UE positioned higher than the intermediate relay UE, may be another intermediate relay UE or the last relay UE.

For example, the configuration information may be included in a sidelink RRC message and may be received. The configuration information may include information for transferring/receiving data of a remote UE that is indirectly connected to a base station (connected through multi-hop relay).

For example, the configuration information may include at least one of local identifier information, radio bearer identifier information, PC5 interface uplink RLC channel ID information, and PC5 interface downlink RLC channel ID information. The configuration information may be transferred by the base station to the last relay UE, and the last relay UE may transfer it to an intermediate relay UE. Such configuration information may correspond to the sidelink L2 relay UE configuration information (SL-L2RelayUE-Config) of the sidelink RRC message. For example, the configuration information may include a sidelink remote UE information element. The sidelink remote UE information element may include at least one of the above-described local identifier information, radio bearer identifier information, PC5 interface uplink RLC channel ID information, and PC5 interface downlink RLC channel ID information. Further, the configuration information may be received through various messages and information elements. The configuration information may include list information of SRAP configurations for a remote UE that is indirectly connected.

The intermediate relay UE may configure an SRAP entity to perform sidelink multi-hop relay operations based on the configuration information. The SRAP entity may be located above an RLC entity to transfer the data of the remote UE to the entity for managing the sidelink relay adaptation protocol. For example, the SRAP entity may be located below the PDCP entity and above the RLC entity. The intermediate relay UE may configure a PC5-SRAP entity to communicate with a parent relay UE and a child relay UE. The last relay UE may configure a PC5-SRAP entity for linkage with a child relay UE and a Uu-SRAP entity for linkage with a base station.

A data processing method of the intermediate relay UE may include controlling the transfer of SRAP data received by a reception part of the SRAP entity on a PC5 interface to a transmitting part of the SRAP entity on the PC5 interface (S910).

The intermediate relay UE may control the reception part of the PC5-SRAP entity to receive uplink or downlink data and transfer it to the transmitting part of the PC5-SRAP entity. The transmitting part of the PC5-SRAP entity transfers data to a parent relay UE in the case of uplink. In the case of downlink, the transmitting part of the PC5-SRAP entity transfers data to a child relay UE.

To differentiate data transfer in a relay UE, the data is described as SRAP data.

For example, the intermediate relay UE may remove an SRAP header from SRAP data received at the receiving part of the SRAP entity and add an SRAP header including the same content as that included in the removed SRAP header at the transmitting part of the SRAP entity.

For example, the receiving part of the SRAP entity may transfer an SRAP SDU to the transmitting part. The receiving part of the SRAP entity may remove the SRAP header when transferring the SRAP SDU. The transmitting part may add an SRAP header with the same content as that included in the SRAP data PDU header before removal. The transmitting part may transfer the data with the SRAP header added to the parent relay UE or the child relay UE.

For example, the data transferred by the operation in the SRAP entity may be a data packet that does not correspond to SRBO of the remote UE. In other words, the above-described operations of the SRAP transmitting part and receiving part may be performed only when the data is not transferred through SRBO, and the header removal operation may be performed. Alternatively, the above-described operations may be performed without being limited to the transfer radio bearer of the data packet.

The data processing method of the intermediate relay UE may include determining an egress link or an egress RLC channel for transmitting data to the child relay UE based on the configuration information (S920).

For example, determining the egress link or the egress RLC channel may, if local identification information included in the configuration information and a UE identifier field of the SRAP data match for downlink data, determines an egress link on the PC5 interface corresponding to the child relay UE configured for the local identification information as the egress link for transmitting the data. For example, the intermediate relay UE may identify the value of the UE identifier field included in the header of SRAP data when downlink data is received. The intermediate relay UE may identify whether the value of the UE identifier field matches the local identifier information included in the configuration information. For example, it may identify whether the value of the UE identifier field is the same as the local identifier information. A plurality of pieces of local identifier information may be included according to the remote UE or SRAP entity. Therefore, it may be necessary to identify whether there is local identifier information matching the value of the UE identifier field.

When the value of the UE identifier field matches the local identifier information, the intermediate relay UE may determine the egress link on the PC5 interface corresponding to the child relay UE configured for the corresponding local identifier information as the egress link for downlink data transfer. The intermediate relay UE may transfer data using the determined egress link.

As another example, determining the egress link or the egress RLC channel may, if local identification information included in the configuration information and a UE identifier field of the SRAP data match, determine an egress RLC channel configured for radio bearer identification information included in the configuration information and the local identification information as the egress RLC channel for transmitting the data.

For example, if the local identifier information included in the configuration information matches the UE identifier field value of the data, the radio bearer identifier information for the remote UE that matches the SRB ID or DRB ID determined by the bearer identifier field of the data may be included in the configuration information.

The intermediate relay UE may determine the egress RLC channel using the local identifier information and the radio bearer identifier information included in the configuration information. For example, the intermediate relay UE may select and determine the egress RLC channel (e.g., sl-egressRLC-ChannelPC5 or sl-egressRLC-Channel-DL) configured by mapping with the local identifier information and the radio bearer identifier information.

In other words, the intermediate relay UE may perform an operation for transferring data by mapping the PC5 RLC channel with the parent relay UE and the PC5 RLC channel with the child relay UE using at least one of the radio bearer identifier information and the local identifier information. The radio bearer identifier may be information for distinguishing the radio bearer of the remote UE.

Meanwhile, the child relay UE may, if a receiving part of an SRAP entity of the child relay UE receives uplink data corresponding to SRBO, forward the uplink data to a transmitting part of the SRAP entity of the child relay UE, and the transmitting part of the SRAP entity of the child relay UE may add an SRAP header to the uplink data and transmits the uplink data.

For example, the child relay UE may be the first relay UE directly connected to the remote UE. As the first relay UE, the child relay UE may be connected to the remote UE and the intermediate relay UE. The SRAP receiving part of the child relay UE may receive uplink data corresponding to SRBO from the remote UE. The child relay UE transfers the received uplink data to the transmitting part. The transmitting part may add an SRAP header for transferring the uplink data and transfer it to the intermediate relay UE. In other words, if the child relay UE is the first relay UE, the transmitting part may add the SRAP header and transmit it without removing the SRAP header from the uplink data.

Through the above-described operation, smooth data transmission between the remote UE and the base station in the sidelink multi-hop relay configuration may be achieved, and links and channels may be effectively selected for transmission.

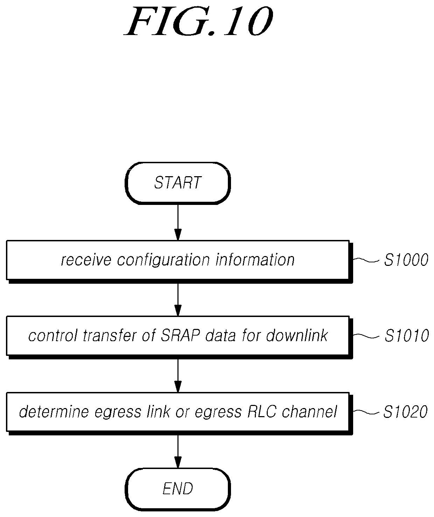

FIG. 10 is a block diagram illustrating operations of a last relay UE according to an embodiment.

Referring to FIG. 10, a method for data processing of a last relay UE providing a multi-hop relay operation in a sidelink network may include receiving configuration information for processing data for a remote UE from a base station (S1000)

As described above, the last relay UE means a relay UE connected to the base station through a Uu interface. The last relay UE is the first relay UE connected to the base station. The last relay UE is the parent relay UE from the perspective of the intermediate relay UE, and the intermediate relay UE is the child relay UE from the perspective of the last relay UE.

For example, the last relay UE receives the configuration information configured for the remote UE to receive data through the sidelink multi-hop relay operation from the base station. The intermediate relay UE, as described above, means a relay UE configured between the last relay UE and the remote UE. The intermediate relay UE may be configured to perform both relay UE operation and remote UE operation simultaneously. The intermediate relay UE may include a relay UE function for relaying data between the remote UE and the parent UE. Further, the intermediate relay UE may include the remote UE function for operating as the remote UE.

For example, the configuration information may be included in an RRC message and may be received. Or, the configuration information may be included and received in a sidelink RRC message.

The configuration information may include information for transferring/receiving data of a remote UE that is indirectly connected to a base station (connected through multi-hop relay).

For example, the configuration information may include at least one of local identifier information, radio bearer identifier information, PC5 interface uplink RLC channel ID information, and PC5 interface downlink RLC channel ID information. The configuration information may be transferred by the base station to the last relay UE, and the last relay UE may transfer it to an intermediate relay UE. The configuration information may be the sidelink L2 relay UE configuration information (SL-L2RelayUE-Config) of the sidelink RRC message. For example, the configuration information may include a sidelink remote UE information element. The sidelink remote UE information element may include at least one of the above-described local identifier information, radio bearer identifier information, PC5 interface uplink RLC channel ID information, and PC5 interface downlink RLC channel ID information. Further, the configuration information may be received through various messages and information elements. The configuration information may include list information of SRAP configurations for a remote UE that is indirectly connected.

The last relay UE may configure an SRAP entity to perform sidelink multi-hop relay operations based on the configuration information. The SRAP entity may be configured above an RLC entity to transfer the data of the remote UE to the entity for managing the sidelink relay adaptation protocol. For example, the SRAP entity may be configured below the PDCP entity and above the RLC entity. The last relay UE may configure a PC5-SRAP entity for linkage with a child relay UE and a Uu-SRAP entity for linkage with a base station.

The data processing method of the last relay UE may include controlling the transfer of sidelink relay adaptation protocol (SRAP) data received by a reception part of the SRAP entity on a Uu interface to a transmitting part of the SRAP entity on the PC5 interface (S1010).

For example, the last relay UE may remove an SRAP header from SRAP data received at the receiving part of the SRAP entity and add an SRAP header with the same content as the removed one at the transmitting part of the SRAP entity.

For example, the receiving part of the SRAP entity may transfer an SRAP SDU to the transmitting part. The receiving part of the SRAP entity may remove the SRAP header when transferring the SRAP SDU. The transmitting part may add an SRAP header including the same content as that included in the SRAP data PDU header before removal. The transmitting part may transfer the data with the SRAP header added to the intermediate relay UE or the base station.

For example, the data transferred by the operation in the SRAP entity may be a data packet that does not correspond to SRBO of the remote UE. In other words, the above-described operations of the SRAP transmitting part and receiving part may be performed only when the data is not transferred through SRBO, and the header removal operation may be performed. Alternatively, the above-described operations may be performed without being limited to the transfer radio bearer of the data packet.

The data processing method of the last relay UE may include determining an egress link or an egress RLC channel for transmitting downlink data to the child relay UE based on the configuration information (S1020).

For example, determining the egress link or the egress RLC channel may, if local identification information included in the configuration information and a UE identifier field of the SRAP data match, determine an egress link on the PC5 interface corresponding to the child relay UE configured for the local identification information as the egress link for transmitting the downlink data. For example, the last relay UE may identify the value of the UE identifier field included in the header of SRAP data when downlink data is received. The last relay UE may identify whether the value of the UE identifier field matches the local identifier information included in the configuration information. For example, the last relay UE may identify whether the value of the UE identifier field is the same as the local identifier information. A plurality of pieces of local identifier information may be included according to the remote UE or SRAP entity. Therefore, it may be necessary to identify whether there is local identifier information matching the value of the UE identifier field.

When the value of the UE identifier field matches the local identifier information, the last relay UE may determine the egress link on the PC5 interface corresponding to the child relay UE configured for the corresponding local identifier information as the egress link for downlink data transfer. The last relay UE may transfer data to the intermediate relay UE using the determined egress link.

As another example, determining the egress link or the egress RLC channel may, if local identification information included in the configuration information and a UE identifier field of the SRAP data match, determine an egress RLC channel configured for radio bearer identification information included in the configuration information and the local identification information as the egress RLC channel for transmitting the downlink data.

For example, if the local identifier information included in the configuration information matches the UE identifier field value of the data, the radio bearer identifier information for the remote UE that matches the SRB ID or DRB ID determined by the bearer identifier field of the data may be included in the configuration information.

The last relay UE may determine the egress RLC channel using the local identifier information and the radio bearer identifier information included in the configuration information. For example, the last relay UE may select or determine the egress RLC channel (e.g., sl-egressRLC-ChannelPC5 or sl-egressRLC-Channel-DL) configured by mapping with the local identifier information and the radio bearer identifier information.

In other words, the last relay UE may perform an operation for transferring data by mapping the PC5 RLC channel with the intermediate relay UE using at least one of the radio bearer identifier information and the local identifier information. The radio bearer identifier may be information for distinguishing the radio bearer of the remote UE.

Meanwhile, the child relay UE may, if a receiving part of an SRAP entity of the child relay UE receives uplink data corresponding to SRBO, transfer the uplink data to a transmitting part of the SRAP entity of the child relay UE, and the transmitting part of the SRAP entity of the child relay UE may add an SRAP header to the uplink data and transmits the uplink data.

For example, the child relay UE may be the first relay UE directly connected to the remote UE. As the first relay UE, the child relay UE may be connected to the remote UE and the intermediate relay UE. The SRAP receiving part of the child relay UE may receive uplink data corresponding to SRBO from the remote UE. The child relay UE transfers the received uplink data to the transmitting part. The transmitting part may add an SRAP header for transferring the uplink data and transfer it to the intermediate relay UE. In other words, if the child relay UE is the first relay UE, the transmitting part may add the SRAP header and transmit it without removing the SRAP header from the uplink data.

Through the above-described operation, smooth data transmission between the remote UE and the base station in the sidelink multi-hop relay configuration may be achieved, and links and channels may be effectively selected for transmission.

Below, the above-described data processing operation is described in more detail and variously. The embodiments described below may be combined in any combination to constitute an embodiment of the disclosure.

### Signaling bearer mapping on the PC5 interface between relay UEs

The remote UE may perform an RRC connection setup procedure through a plurality of sidelink relay UEs.

The remote UE may transmit an RRC setup/configuration request message (e.g., RRCSetupRequest) for connection setup with the base station through the first relay UE. The message may be transmitted using the specified PC5 relay RLC channel configuration. For example, the first relay UE may transmit using the specified configurations for the PC5 RLC channel for transmission/reception of the SRBO message of the remote UE. For example, the specified configuration may employ the SL-RLCO configuration. The specified configuration may use AM RLC and may have 56 allocated as the logicalChannelIdentity. The specified configuration may be preconfigured in the first relay UE or may be configured by the base station.

In the first relay UE, the SRAP entity on the PC5 interface between the remote UE and the first relay UE (or the receiving part on the SRAP entity of the PC5 interface between remote UE and first relay UE) may deliver data to the (collocated) SRAP entity on the PC5 interface between the first relay UE and the last relay UE (or the transmitting part on the SRAP entity of PC5 interface between first relay UE and intermediate relay UE).

The transmitting part on the SRAP entity of the PC5 interface between the first relay UE and the intermediate relay UE may add an SRAP header. When the SRAP data PDU is received from SL-RLCO, the transmitting part on the SRAP entity may determine the UE identifier field and the bearer identifier field. The UE identifier field may be determined as the local UE identifier of the remote UE transmitting the SRAP data PDU. The bearer identifier field may be determined as 0.

For example, if there is an entry for a sidelink L2 ID matching the L2 ID of the remote UE where the SRAP data PDU is received in the remote UE list (sl-RemoteUE-ToAddModList) information to be additionally modified, the UE identifier corresponding to the local UE identifier configured for the sidelink L2 ID may be determined. For reference, in the prior art, the U2N SRAP data PDU for SRBO delivered through the PC5 interface was composed of only one data field without any SRAP header. Therefore, multi-hop relay support was not possible through the prior art.

The first relay UE may transmit an SRAP data PDU including an RRC setup/configuration request message (e.g., RRCSetupRequest) to the intermediate relay UE. The SRAP data PDU may include an SRAP header including a bearer ID field and a UE ID field for the above-described SRAP data PDU. The SRAP data PDU may be transmitted using the specified PC5 relay RLC channel configuration. For example, the first relay UE may transmit using the specified configurations for the PC5 RLC channel for transmission/reception of the SRBO message of the remote UE. For example, the specified configuration may employ the SL-RLCO configuration. The specified configuration may use AM RLC and may have 56 allocated as the logicalChannelIdentity. The specified configuration may be preconfigured in the first relay UE or may be configured by the base station.

In the intermediate relay UE, the SRAP entity on the PC5 interface between the first relay UE and the intermediate relay UE (or the receiving part on the SRAP entity of the PC5 interface between first relay UE and intermediate relay UE) may deliver to the (collocated) SRAP entity on the PC5 interface between the intermediate relay UE and the last relay UE (or the transmitting part on the SRAP entity of PC5 interface between intermediate relay UE and last relay UE). When transferring SRAP SDUs, the receiving part on the SRAP may remove the SRAP header from the received SDU, and the transmitting part on the SRAP may add the SRAP header. The transmitting part on the SRAP may add the SRAP header with the same SRAP header content carried on the SRAP header before removal.

For example, it may have SRAP header content including the local UE identifier field of the remote UE transmitting the SRAP data PDU and the bearer identifier field set to 0.

Alternatively, when transferring SRAP SDUs/PDUs, the receiving part on the SRAP may be configured not to remove the SRAP header, and the transmitting part on the SRAP may be configured not to add/modify the SRAP header. The transmitting part on the SRAP may transmit with the same SRAP header content carried on the SRAP header from the SRAP receiving part.

If the SRAP data PDU received from SL-RLCO contains only one data field without any SRAP header, the transmitting part on the SRAP entity of the PC5 interface between the intermediate relay UE and the last relay UE may add an SRAP header. The transmitting part on the SRAP entity may determine the UE identifier field and the bearer identifier field. The UE identifier field may be determined as the local UE identifier of the remote UE transmitting the SRAP data PDU. The bearer identifier field may be determined as 0.

For example, if there is an entry for a sidelink L2 ID matching the L2 ID of the remote UE where the SRAP data PDU is received in the remote UE list (sl-RemoteUE-ToAddModList) information to be additionally modified, the UE identifier corresponding to the local UE identifier configured for the sidelink L2 ID may be determined.

The intermediate relay UE may transmit an SRAP data PDU including an RRC setup/configuration request message (e.g., RRCSetupRequest) to the last relay UE. The SRAP data PDU may include an SRAP header including a bearer ID field and a UE ID field for the above-described SRAP data PDU. The SRAP data PDU may be transmitted using the specified PC5 relay RLC channel configuration. For example, the intermediate relay UE may transmit using the specified configurations for the PC5 RLC channel for transmission/reception of the SRBO message of the remote UE. For example, the specified configuration may employ the SL-RLCO configuration. The specified configuration may use AM RLC and may have 56 allocated as the logicalChannelIdentity. The specified configuration may be preconfigured in the first relay UE or may be configured by the base station.

In the last relay UE, the SRAP entity on the PC5 interface between the intermediate relay UE and the last relay UE (or the receiving part on the SRAP entity of the PC5 interface between intermediate relay UE and last relay UE) may deliver to the (collocated) SRAP entity on the Uu interface between the last relay UE and the base station (or the transmitting part on the SRAP entity of Uu interface between last relay UE and gNB). When transferring SRAP SDUs, the receiving part on the SRAP may remove the SRAP header, and the transmitting part on the SRAP may add the SRAP header. The transmitting part on the SRAP may add the SRAP header with the same SRAP header content carried on the SRAP header before removal.

For example, it may have SRAP header content including the local UE identifier field of the remote UE transmitting the SRAP data PDU and the bearer identifier field set to 0.

Alternatively, when transferring SRAP SDUs/PDUs, the receiving part on the SRAP may be configured not to remove the SRAP header, and the transmitting part on the SRAP may be configured not to add/modify the SRAP header. The transmitting part on the SRAP may transmit with the same SRAP header content carried on the SRAP header from the SRAP receiving part.

If the SRAP data PDU is received from SL-RLCO in the last relay UE but is composed of only one data field without any SRAP header, the transmitting part on the SRAP entity of the Uu interface between the last relay UE and the gNB may add an SRAP header. The transmitting part on the SRAP entity may determine the UE identifier field and the bearer identifier field. The UE identifier field may be determined as the local UE identifier of the remote UE transmitting the SRAP data PDU. The bearer identifier field may be determined as 0. For example, if there is an entry for a sidelink L2 ID matching the L2 ID of the remote UE where the SRAP data PDU is received in the remote UE list (sl-RemoteUE-ToAddModList) information to be additionally modified, the UE identifier corresponding to the local UE identifier configured for the sidelink L2 ID may be determined.

According to multi-hop sidelink relaying, there may be a shortage of local UE identifiers for the remote UE. For example, due to a shortage of identifiers, a local UE identifier may not be allocated, or a collision may occur due to duplicate usage. To prevent this, the local UE identifier may use an identifier other than the typical local UE identifier. For example, an L2 destination ID, an L2 source ID, a C-RNTI, or a local UE identifier having a bit length of at least 8 bits may be used. In the disclosure, the identifier of the remote UE may use the conventional local UE identifier. Alternatively, in the disclosure, the identifier of the remote UE may use one of an L2 destination ID, an L2 source ID, a C-RNTI, or a local UE identifier with any bit count of 8 bits or more.

### Data processing in a multi-hop relay UE

The base station may configure SRBO relaying the Uu relay RLC channel to the last relay UE. The base station may transmit an RRC setup message (e.g., RRCSetup) in response to an RRC setup/configuration request received from the remote UE. The message may be transmitted using SRBO relaying the Uu relay RLC channel on the Uu interface. It may be transmitted using a specified PC5 relay RLC channel on the PC5 interface.

The base station may configure, in the last relay UE, information for mapping between a "PC5 RLC channel on the PC5 interface between the last relay UE and the intermediate relay UE" and a "Uu RLC channel on a Uu interface between the last relay UE and the base station." The configuration information may be associated/mapped to a radio bearer identifier of the remote UE indirectly connected to the last relay UE.

For an SRAP data PDU to be transmitted, if a local UE identifier for the remote UE in sidelink remote UE list information to be additionally modified matches a UE identifier (UE ID) field in the SRAP data PDU, an SRAP entity may determine a transmission link (egress link) on the PC5 interface directly/indirectly connecting the corresponding remote UE configured with the local UE identifier. For example, the last relay UE may recognize that the remote UE is connected to the intermediate relay UE according to the configuration indicated by the base station. For the downlink data, the last relay UE may determine the PC5 interface to an egress relay UE (intermediate relay UE) of the remote UE as an egress link. For uplink data, the last relay UE may determine the egress link of the remote UE as the Uu interface to the base station.

If the SRAP data PDU is for SRBO, an egress PC5 RLC channel is determined in the determined egress link corresponding to the logical channel identifier for SL-RLCO.

Otherwise, if the local UE identifier included in the sidelink relay SRAP configuration in the sidelink remote UE list to be additionally modified matches the UE identifier (UE ID) field in the SRAP data PDU and/or the remote UE radio bearer identifier matches the SRB/DRB ID of the SRAP data PDU determined by the bearer ID field, and if the SRAP data PDU for SRB1 is intended for SRB1 but the sidelink egress RLC channel is absent in the sidelink relay SRAP configuration, the egress PC5 relay RLC channel in the determined egress link corresponding to the logicalChannelIdentity for SL-RLC1 is determined.

Otherwise, the egress PC5 relay RLC channel is determined in the determined egress link corresponding to the sidelink egress RLC channel configured for the remote UE radio bearer identifier and the local UE identifier.

The base station may configure, in the intermediate relay UE, information for mapping between a "PC5 RLC channel on the PC5 interface between the last relay UE and the intermediate relay UE" and a "PC5 RLC channel on a PC5 interface between the intermediate relay UE and first relay UE". The configuration information may be associated/mapped to a radio bearer identifier of the remote UE indirectly connected to the intermediate relay UE.

For an SRAP data PDU to be transmitted, if a local UE identifier for the remote UE in sidelink remote UE list information to be additionally modified matches a UE identifier (UE ID) field in the SRAP data PDU, an SRAP entity may determine a transmission link (egress link) on the PC5 interface directly/indirectly connecting the corresponding remote UE configured with the local UE identifier. For example, the intermediate relay UE may recognize that the remote UE is connected to the first relay UE according to the configuration indicated by the base station. For the downlink data, the intermediate relay UE may determine the PC5 interface to an egress relay UE (first relay UE) of the remote UE as an egress link. For the uplink data, the intermediate relay UE may determine the PC5 interface to an egress relay UE (e.g., last relay UE) of the remote UE as an egress link.

If the SRAP data PDU is intended for SRBO, an egress PC5 RLC channel is determined in the determined egress link corresponding to the logical channel identifier for SL-RLCO.

Otherwise, if the local UE identifier included in the sidelink relay SRAP configuration in the sidelink remote UE list to be additionally modified matches the UE identifier (UE ID) field in the SRAP data PDU and/or the remote UE radio bearer identifier matches the SRB/DRB ID of the SRAP data PDU determined by the bearer ID field, and if the SRAP data PDU for SRB1 is intended for SRB1 but the sidelink egress RLC channel is absent in the sidelink relay SRAP configuration, the egress PC5 relay RLC channel in the determined egress link corresponding to the logicalChannelIdentity for SL-RLC1 is determined.

Otherwise, the egress PC5 relay RLC channel is determined in the determined egress link corresponding to the sidelink egress RLC channel configured for the remote UE radio bearer identifier and the local UE identifier.

The base station may configure, in the first relay UE, information for mapping between a "PC5 RLC channel on the PC5 interface between the intermediate relay UE and the first relay UE" and a "PC5 RLC channel on a PC5 interface between the first relay UE and remote UE". The configuration information may be associated/mapped to a radio bearer identifier of the remote UE connected to the first relay UE.

For an SRAP data PDU to be transmitted, if a local UE identifier for the remote UE in sidelink remote UE list information to be additionally modified matches a UE identifier (UE ID) field in the SRAP data PDU, an SRAP entity may determine a transmission link (egress link) on the PC5 interface directly/indirectly connecting the corresponding remote UE configured with the local UE identifier. For example, the first relay UE may recognize that the remote UE is connected to the first relay UE according to the configuration indicated by the base station. For the downlink data, the first relay UE may determine the PC5 interface to the remote UE as an egress link. For the uplink data, the first relay UE may determine the PC5 interface to an egress relay UE (intermediate relay UE) of the remote UE as an egress link.

If the SRAP data PDU is for SRBO, an egress PC5 RLC channel is determined in the determined egress link corresponding to the logical channel identifier for SL-RLCO.

Otherwise, if the local UE identifier included in the sidelink relay SRAP configuration in the sidelink remote UE list to be additionally modified matches the UE identifier (UE ID) field in the SRAP data PDU and/or the remote UE radio bearer identifier matches the SRB/DRB ID of the SRAP data PDU determined by the bearer ID field, and if the SRAP data PDU for SRB1 is intended for SRB1 but the sidelink egress RLC channel is absent in the sidelink relay SRAP configuration, the egress PC5 relay RLC channel in the determined egress link corresponding to the logicalChannelIdentity for SL-RLC1 is determined.

Otherwise, the egress PC5 relay RLC channel is determined in the determined egress link corresponding to the sidelink egress RLC channel configured for the remote UE radio bearer identifier and the local UE identifier.

### Header processing in a multi-hop relay UE

In the last relay UE, the SRAP entity on the Uu interface between the base station and the last relay UE (or the receiving part on the SRAP entity of Uu interface) may deliver data to the (collocated) SRAP entity on the PC5 interface between the last relay UE and the intermediate relay UE (or the transmitting part on the SRAP entity of PC5 interface between last relay UE and intermediate relay UE). Alternatively, the SRAP entity on the PC5 interface between the last relay UE and the intermediate relay UE (or the receiving part on the SRAP entity of PC5 interface between last relay UE and intermediate relay UE) may deliver to the (collocated) SRAP entity on the Uu interface between the base station and the last relay UE (or the transmitting part on the SRAP entity of Uu interface).

When delivering SRAP SDUs, the receiving part on the SRAP may remove the SRAP header, and the transmitting part on the SRAP may add the SRAP header. The transmitting part on the SRAP may add the SRAP header with the same SRAP header content carried on the SRAP header before removal. For example, for a downlink data packet corresponding to SRBO (e.g., an SRAP data SDU/PDU including an RRCSetup message), it may have SRAP header content including the local UE identifier field of the remote UE receiving the corresponding SRAP data PDU and the bearer identifier field set to 0. For a downlink data packet not corresponding to SRBO, it may have SRAP header content including the local UE identifier field of the remote UE receiving the corresponding SRAP data PDU and a bearer identifier field, which may be set to either 0 or a radio bearer identifier.

As another example, when transferring SRAP SDUs/PDUs, the receiving part on the SRAP may be configured not to remove the SRAP header, and the transmitting part on the SRAP may be configured not to add/modify the SRAP header. The transmitting part on the SRAP may transmit with the same SRAP header content carried on the SRAP header from the SRAP receiving part.

The SRAP entity (or the receiving part on the SRAP) of the PC5 interface between the last relay UE and the intermediate relay UE at the intermediate relay UE may deliver the SRAP SDU to a collocated SRAP entity (or the transmitting part thereof) on the PC5 interface between the intermediate relay UE and the first relay UE. Alternatively, the SRAP entity (or the receiving part on the SRAP) of the PC5 interface between the intermediate relay UE and the first relay UE may deliver to the collocated SRAP entity (or the transmitting part thereof) on the PC5 interface between the intermediate relay UE and the last relay UE. When delivering SRAP SDUs, the receiving part on the SRAP may remove the SRAP header, and the transmitting part on the SRAP may add the SRAP header. The transmitting part on the SRAP may add the SRAP header with the same SRAP header content carried on the SRAP header before removal.

For example, for a downlink data packet corresponding to SRBO (e.g., an SRAP data SDU/PDU including an RRCSetup message), it may have SRAP header content including the local UE identifier field of the remote UE receiving the corresponding SRAP data PDU and the bearer identifier field set to 0. For a downlink data packet not corresponding to SRBO, it may have SRAP header content including the local UE identifier field of the remote UE receiving the corresponding SRAP data PDU and the radio bearer identifier field.

As another example, when transferring SRAP SDUs/PDUs, the receiving part on the SRAP may be configured not to remove the SRAP header, and the transmitting part on the SRAP may be configured not to add/modify the SRAP header. The transmitting part on the SRAP may transmit with the same SRAP header content carried on the SRAP header from the SRAP receiving part.

In the first relay UE, the SRAP entity on the PC5 interface between the intermediate relay UE and the first relay UE (or the receiving part on the SRAP entity of the PC5 interface between intermediate relay UE and first relay UE) may deliver data to the (collocated) SRAP entity on the PC5 interface between the first relay UE and the last relay UE (or the transmitting part on the SRAP entity of PC5 interface between first relay UE and remote UE). When delivering SRAP SDUs, the receiving part on the SRAP may remove the SRAP header. The transmitting part of the SRAP may skip the SRAP header addition operation. The transmitting part of the SRAP may transmit an SRAP data PDU composed of only a data field without any SRAP header.

In the first relay UE, the SRAP entity on the PC5 interface between the remote UE and the first relay UE (or the receiving part on the SRAP entity of the PC5 interface between remote UE and first relay UE) may deliver data to the (collocated) SRAP entity on the PC5 interface between the first relay UE and the intermediate relay UE (or the transmitting part on the SRAP entity of PC5 interface between first relay UE and intermediate relay UE). The transmitting part of the SRAP may add the SRAP header. The SRAP header may include the local UE identifier of the corresponding remote UE and the radio bearer identifier associated with the corresponding remote UE.

Another embodiment of the disclosure is described below.

The base station may indicate, to the remote UE, the information necessary for enabling sidelink relaying for the remote UE through an RRC message.

In an example, the configuration information for the remote UE may include a C-RNTI, which may be used as the remote UE identifier, and SRAP configuration information used for the remote UE. The SRAP configuration information used for the remote UE may include a local identifier for the remote UE used in the SRAP (hereinafter referred to as the remote UE local identifier for clarity), bearer (e.g., radio bearer) identification information of the remote UE, and mapping list information for the egress link and/or egress RLC channel. For example, it may include one or more of an end-to-end Uu radio bearer identifier of the remote UE, an egress relay UE identifier for uplink transmission at the remote UE, and egress RLC channel information on the PC5 hop for uplink transmission at the remote UE.

The egress relay UE identifier for uplink transmission at the remote UE may include one or more of an L2 destination ID, an L2 source ID, or a C-RNTI of the corresponding sidelink relay UE. When the remote UE is connected to the base station through the "remote UE-first relay UE-intermediate relay UE-last relay UE-base station" path, the egress relay UE identifier for uplink transmission at the remote UE may be the first relay UE identifier. The egress RLC channel information on the PC5 hop for uplink transmission at the remote UE may indicate the logical channel identifier (LCID) of the PC5 RLC channel between the remote UE and the first relay UE.

As another example, the configuration information for the remote UE may include one or more of the following: i) the first, intermediate, candidate relay UE list information (to be additionally modified), ii) the higher relay UE list information for the first, intermediate, candidate relay UE, and iii) network/base station path/relay UE-set/path list information. Here, the first, intermediate, and candidate relay UE list information may include one or more of the identifier of the corresponding sidelink relay UE (e.g., L2 destination ID, L2 source ID, C-RNTI of the first/intermediate relay UE), the identifier information of the last relay UE to which the corresponding sidelink relay UE is directly/indirectly connected (e.g., L2 destination ID, L2 source ID, C-RNTI of the last relay UE), and the number of hops to the base station (or the last relay UE) (from the remote UE or the first/intermediate relay UE).

Here, the higher relay UE list information for the first, intermediate, candidate relay UE may include one or more of the identifier of the corresponding sidelink relay UE (e.g., L2 destination ID, L2 source ID, C-RNTI of another intermediate relay UE or last relay UE), (if any) the identifier information of the last relay UE to which the corresponding sidelink relay UE is directly/indirectly connected (e.g., L2 destination ID, L2 source ID, C-RNTI of the last relay UE), and the number of hops to the base station (or the last relay UE) (from the first/intermediate relay UE or another intermediate relay UE). The network/base station path/relay UE-set information may include set/collection information of sidelink relay UEs included on the path from the remote UE (or the first/intermediate relay UE) to the base station.

For example, when the remote UE is connected to the base station through the path of "remote UE-first relay UE-intermediate relay UE-last relay UE-base station," the path/relay UE-set information may be provided to include first relay UE identifier information, intermediate relay UE identifier information, and last relay UE identifier information. The relay UE identification information may be one or more of the L2 destination ID, the L2 source ID, and the C-RNTI of the sidelink relay UE.

The base station may indicate, to the first and intermediate relay UE, the information necessary for its sidelink relaying operation through an RRC message.

For example, the base station may indicate the information necessary for sidelink relaying for the first relay UE through an RRC message. The corresponding message may include sidelink remote UE list configuration information (sl-RemoteUE-ToAddModList) (to be additionally modified). The sidelink remote UE list configuration information may include C-RNTI, which may be used as an identifier of the remote UE, and SRAP configuration information used for the remote UE. The SRAP configuration information used for the remote UE may include a local identifier for the remote UE used in the SRAP, bearer (e.g., radio bearer) identification information of the remote UE, and mapping list information between the egress link and/or egress RLC channel. For example, it may include one or more of the end-to-end Uu radio bearer identifier of the remote UE, egress relay UE identifier for uplink transmission from the remote UE, egress RLC channel information on the PC5 hop for uplink transmission from the remote UE, (next PC5 hop) egress relay UE identifier for uplink relaying by the sidelink relay connected to the remote UE, and egress RLC channel information (on the next PC5 hop) for uplink relaying by the sidelink relay connected to the remote UE. The egress relay UE identifier for uplink transmission at the remote UE may be one or more of the L2 destination ID, L2 source ID, and C-RNTI of the corresponding sidelink relay UE.

The (next PC5 hop) egress relay UE identifier for uplink relaying by the sidelink relay connected to the remote UE may be one or more of the L2 destination ID, L2 source ID, and C-RNTI of the corresponding sidelink relay UE. When the remote UE is connected to the base station through the "remote UE-first relay UE-intermediate relay UE-last relay UE-base station" path, the egress relay UE identifier for uplink transmission at the remote UE may be the first relay UE identifier. The (next PC5 hop) egress relay UE identifier for uplink relaying by the sidelink relay connected to the remote UE may be the intermediate relay UE identifier. The egress RLC channel information on the PC5 hop for uplink transmission at the remote UE may indicate the logical channel identifier (LCID) of the PC5 RLC channel between the remote UE and the first relay UE. The egress RLC channel information (on the next PC5 hop) for uplink transmission by the sidelink relay connected to the remote UE may indicate the logical channel identifier (LCID) of the PC5 RLC channel between the first relay UE and the intermediate relay UE.

As another example, the base station may indicate the information necessary for sidelink relaying for the first relay UE through an RRC message. The corresponding message may include sidelink remote UE list configuration information (sl-RemoteUE-ToAddModList) (to be additionally modified). The sidelink remote UE list configuration information may include C-RNTI, which may be used as an identifier of the remote UE, and SRAP configuration information used for the remote UE. The SRAP configuration information used for the remote UE may include a local identifier for the remote UE used in the SRAP, bearer (e.g., radio bearer) identification information of the remote UE, and mapping list information between the egress link and/or egress RLC channel. For example, it may include one or more of the end-to-end Uu radio bearer identifier of the remote UE, egress remote UE identifier for downlink transmission from the first relay UE, egress RLC channel information on the PC5 hop for downlink transmission from the first relay UE, PC5 hop ingress relay UE identifier for downlink relaying from the first relay UE, and PC5 hop ingress RLC channel information for downlink relaying from the relay UE.

When the remote UE is connected to the base station through the "remote UE-first relay UE-intermediate relay UE-last relay UE-base station" path, the egress relay UE identifier for uplink transmission at the remote UE may be the first relay UE identifier.

The egress remote UE identifier for downlink transmission from the first relay UE may be the remote UE identifier. The egress RLC channel information on the PC5 hop for downlink transmission from the first relay UE may represent the logical channel identifier (LCID) of the PC5 RLC channel between the remote UE and the first relay UE. The PC5 hop ingress relay UE identifier for downlink relaying from the first relay UE may be the intermediate relay UE identifier. The PC5 hop ingress RLC channel information for downlink relaying from the relay UE may represent the logical channel identifier (LCID) of the PC5 RLC channel between the first relay UE and the intermediate relay UE.

As another example, the base station may differentiate the information configured in the first relay for relaying of the sidelink remote UE between uplink transmission and downlink transmission and configure it in the first relay UE through different configuration information.

As another example, the base station may configure it in the first relay UE through one (integrated/combined) configuration information without distinguishing the information configured in the first relay for relaying of the sidelink remote UE between uplink transmission and downlink transmission. Using the integrated or combined configuration information, the first relay UE may map the PC5 RLC channel between the remote UE and the first relay UE and the PC5 RLC channel between the first relay UE and the intermediate relay UE. For example, it may configure the ingress/egress PC5 RLC channel information between the remote UE and the first relay UE and the ingress/egress PC5 RLC channel information between the first relay UE and the intermediate relay UE. Accordingly, the first relay UE may map the ingress PC5 RLC channel between the remote UE and the first relay UE to the egress PC5 RLC channel between the first relay UE and the intermediate relay UE for uplink data. Alternatively, or additionally, the first relay UE may map the egress PC5 RLC channel between the remote UE and the first relay UE to the ingress PC5 RLC channel between the first relay UE and the intermediate relay UE for downlink data.

As another example, the RRC message including the information necessary for sidelink relaying for the first relay UE may include one or more of the higher relay UE list information for the first relay UE, the network/base station path/relay UE-set/path list information, and the lower relay UE list information for the first relay UE. The higher relay UE list information for the first relay UE list may include one or more of the identifier of the corresponding sidelink relay UE (e.g., L2 destination ID, L2 source ID, C-RNTI of another intermediate relay UE or last relay UE), (if any) the identifier information of the last relay UE to which the corresponding sidelink relay UE is directly/indirectly connected (e.g., L2 destination ID, L2 source ID, C-RNTI of the last relay UE), and the number of hops to the base station (or the last relay UE) (from the first relay UE or intermediate relay UE).

The network/base station path/relay UE-set information may include set/collection information of sidelink relay UEs included on the path from the first relay UE (or the intermediate relay UE) to the base station. For example, when the first relay UE is connected to the base station through the path of "remote UE-first relay UE-intermediate relay UE-last relay UE-base station," the path/relay UE-set information may be provided to include {intermediate relay UE identifier information, last relay UE identifier information}. The relay UE identification information may be one or more of the L2 destination ID, the L2 source ID, and the C-RNTI of the sidelink relay UE. The higher relay UE list information for the first relay UE may include one or more of the identifier of the corresponding sidelink relay UE (e.g., L2 destination ID, L2 source ID, C-RNTI, or local UE identifier of another first relay UE, another intermediate relay UE, or remote UE), (if any) the identifier information of the last relay UE to which the corresponding sidelink relay UE is directly/indirectly connected (e.g., L2 destination ID, L2 source ID, C-RNTI of the last relay UE).

As another example, the base station may indicate the information necessary for sidelink relaying for the intermediate relay UE through an RRC message. The corresponding message may include sidelink remote UE list configuration information (sl-RemoteUE-ToAddModList) (to be additionally modified).

The sidelink remote UE list configuration information may include remote UE list configuration information directly connected to the intermediate relay UE through a PC5 interface. The remote UE directly connected to the intermediate relay UE is a UE different from the remote UE directly connected to the first relay UE. The remote UE list configuration information directly connected to the intermediate relay UE through a PC5 interface may include the above-described sidelink remote UE list configuration information of the first relay UE. Alternatively, it may include one or more pieces of information included in the above-described sidelink remote UE list configuration information of the first relay UE.

The sidelink remote UE list configuration information may include configuration information of a remote UE list indirectly connected to the intermediate relay UE through a plurality of PC5 interfaces. For example, when the remote UE is connected to the base station through the "remote UE-first relay UE-intermediate relay UE-last relay UE-base station" path, the remote UE directly connected to the first relay UE may be the remote UE indirectly connected to the intermediate relay UE. The remote UE list configuration information indirectly connected to the intermediate relay UE through the plurality of PC5 interfaces may include C-RNTI, which may be used as the remote UE identifier of the corresponding remote UE, and SRAP configuration information (or RRC configuration information) used for the remote UE. The SRAP configuration information used for the remote UE may include a local identifier for the remote UE used in the SRAP. The SRAP configuration information used for the remote UE may include bearer (e.g., radio bearer) identification information of the remote UE, mapping/mapping list information for the ingress link and/or ingress RLC channel, and egress link and/or egress RLC channel.

For example, it may include one or more of the end-to-end Uu radio bearer identifier of the remote UE, ingress relay UE identifier of the uplink data/traffic of the remote UE at the intermediate relay UE, PC5 hop ingress RLC channel information of the uplink data or uplink traffic of the remote UE at the intermediate relay UE, (next PC5 hop) egress relay UE identifier of uplink data/traffic of the remote UE at the intermediate relay UE, and (next PC5 hop) egress RLC channel information of the uplink data/traffic of the remote UE at the intermediate relay UE. The ingress relay UE identifier may be one or more of the L2 destination ID, L2 source ID, and C-RNTI of the corresponding sidelink relay UE. The egress relay UE identifier may be one or more of the L2 destination ID, L2 source ID, and C-RNTI of the corresponding sidelink relay UE.

When the remote UE is connected to the base station through the "remote UE-first relay UE-intermediate relay UE-last relay UE-base station" path, the ingress relay UE identifier of the uplink data/traffic of the remote UE at the intermediate relay UE may correspond to the first relay UE identifier. The PC5 hop ingress RLC channel information of the uplink data/traffic of the remote UE at the intermediate relay UE may represent the logical channel identifier (LCID) of the PC5 RLC channel between the first relay UE and the intermediate relay UE. The (next PC5 hop) egress relay UE identifier of uplink data/traffic of the remote UE at the intermediate relay UE may be the last relay UE identifier. The (next PC5 hop) egress RLC channel information of uplink data/traffic of the remote UE at the intermediate relay UE may represent the logical channel identifier (LCID) of the PC5 RLC channel between the intermediate relay UE and the last relay UE.

As another example, the sidelink remote UE list configuration information may include remote UE list configuration information indirectly connected to the intermediate relay UE through the plurality of PC5 interfaces. For example, when the remote UE is connected to the base station through the "remote UE-first relay UE-intermediate relay UE-last relay UE-base station" path, the remote UE directly connected to the first relay UE may be the remote UE indirectly connected to the intermediate relay UE. The remote UE list configuration information indirectly connected to the intermediate relay UE through the plurality of PC5 interfaces may include C-RNTI, which may be used as the remote UE identifier of the corresponding remote UE, and SRAP configuration information (or RRC configuration information) used for the remote UE. The SRAP configuration information may include a local identifier for the remote UE used in the SRAP.

The SRAP configuration information used for the remote UE may include bearer (e.g., radio bearer) identification information of the remote UE, mapping/mapping list information for the ingress link and/or ingress RLC channel, and egress link and/or egress RLC channel. For example, it may include one or more of the end-to-end Uu radio bearer identifier of the remote UE, ingress relay UE identifier of the downlink data/traffic of the remote UE at the intermediate relay UE, PC5 hop ingress RLC channel information of the downlink data/traffic of the remote UE at the intermediate relay UE, (next PC5 hop) egress relay UE identifier of downlink data/traffic of the remote UE at the intermediate relay UE, and (next PC5 hop) egress RLC channel information of the downlink data/traffic of the remote UE at the intermediate relay UE. The ingress relay UE identifier may be one or more of the L2 destination ID, L2 source ID, and C-RNTI of the corresponding sidelink relay UE.

The egress relay UE identifier may be one or more of the L2 destination ID, L2 source ID, and C-RNTI of the corresponding sidelink relay UE. When the remote UE is connected to the base station through the "remote UE-first relay UE-intermediate relay UE-last relay UE-base station" path, the ingress relay UE identifier of the downlink data/traffic of the remote UE at the intermediate relay UE may correspond to the last relay UE identifier. The PC5 hop ingress RLC channel information of the downlink data/traffic of the remote UE at the intermediate relay UE may represent the logical channel identifier (LCID) of the PC5 RLC channel between the last relay UE and the intermediate relay UE. The (next PC5 hop) egress relay UE identifier of downlink data/traffic of the remote UE at the intermediate relay UE may be the first relay UE identifier. The (next PC5 hop) egress RLC channel information of downlink data/traffic of the remote UE at the intermediate relay UE may represent the logical channel identifier (LCID) of the PC5 RLC channel between the intermediate relay UE and the first relay UE.

As another example, the base station may distinguish the information configured in the intermediate relay UE for relaying of the sidelink remote UE's uplink transmission and downlink transmission and configure it in the intermediate relay UE through different configuration information.

As another example, the base station may configure it in the intermediate relay UE through one (integrated/combined) configuration information without distinguishing the information for relaying of the sidelink remote UE's uplink transmission and downlink transmission. Using the integrated/combined configuration information, the intermediate relay UE may map the PC5 RLC channel between the first relay UE and the intermediate relay UE and the PC5 RLC channel between the intermediate relay UE and the last relay UE. For example, it may configure the ingress/egress PC5 RLC channel information between the first relay UE and the intermediate relay UE and the ingress/egress PC5 RLC channel information between the intermediate relay UE and the last relay UE.

Accordingly, the intermediate relay UE may map the ingress PC5 RLC channel between the first relay UE and the intermediate relay UE to the egress PC5 RLC channel between the intermediate relay UE and the last relay UE for uplink data. Additionally, or alternatively, the intermediate relay UE may map the egress PC5 RLC channel between the intermediate relay UE and the first relay UE to the ingress PC5 RLC channel between the intermediate relay UE and the last relay UE for downlink data.

As another example, the RRC message indicated by the base station for sidelink relaying configuration may include one or more of the higher relay UE list information for the intermediate relay UE, the network/base station path/relay UE-set/path list information, and the lower relay UE list information for the intermediate relay UE. The higher relay UE list information for the intermediate relay UE list may include one or more of the identifier of the corresponding sidelink relay UE (e.g., L2 destination ID, L2 source ID, C-RNTI of another intermediate relay UE or last relay UE), (if any) the identifier information of the last relay UE to which the corresponding sidelink relay UE is directly/indirectly connected (e.g., L2 destination ID, L2 source ID, C-RNTI of the last relay UE), and the number of hops to the base station (or the last relay UE) (from the intermediate relay UE).

The network/base station path/relay UE-set information may include set/collection information of sidelink relay UEs included on the path from the intermediate relay UE to the base station. For example, when the intermediate relay UE is connected to the base station through the path of "intermediate relay UE-last relay UE-base station," the path/relay UE-set information may be provided to include {last relay UE identifier information}. The relay UE identification information may be one or more of the L2 destination ID, the L2 source ID, and the C-RNTI of the sidelink relay UE. The higher relay UE list information for the intermediate relay UE may include one or more of the identifier of the corresponding sidelink relay UE (e.g., L2 destination ID, L2 source ID, C-RNTI, or local UE identifier of another first relay UE, another intermediate relay UE, or remote UE), (if any) the identifier information of the last relay UE to which the corresponding sidelink relay UE is directly/indirectly connected (e.g., L2 destination ID, L2 source ID, C-RNTI of the last relay UE).

The base station may indicate, to the last relay UE, the information necessary for sidelink relaying for the relay UE through an RRC message.

For example, the base station may indicate the information necessary for sidelink relaying for the last relay UE through an RRC message. The corresponding message may include sidelink remote UE list configuration information (to be additionally modified).

The sidelink remote UE list configuration information may include remote UE list configuration information directly connected to the last relay UE through a PC5 interface. The remote UE directly connected to the last relay UE is an UE different from the remote UE directly connected to the first relay UE. The remote UE list configuration information directly connected to the intermediate relay UE through a PC5 interface may include the above-described sidelink remote UE list configuration information of the first relay UE. Alternatively, it may include one or more pieces of information included in the above-described sidelink remote UE/ list configuration information of the first relay UE.

The sidelink remote UE list configuration information may include remote UE list configuration information indirectly connected to the last relay UE through a plurality of PC5 interfaces. For example, when the remote UE is connected to the base station through the "remote UE-first relay UE-intermediate relay UE-last relay UE-base station" path, the remote UE directly connected to the first relay UE may be the remote UE indirectly connected to the last relay UE. (and/or the remote UE directly connected to the intermediate relay UE may be the remote UE indirectly connected to the last relay UE).

The remote UE list configuration information indirectly connected to the last relay UE through the plurality of PC5 interfaces may include C-RNTI, which may be used as the remote UE identifier of the corresponding remote UE, and SRAP configuration information (or RRC configuration information) used for the remote UE. The SRAP configuration information used for the remote UE may include a local identifier for the remote UE used in the SRAP. The SRAP configuration information used for the remote UE may include bearer (e.g., radio bearer) identification information of the remote UE, mapping/mapping list information for the ingress link and/or ingress RLC channel, and egress link and/or egress RLC channel.

For example, it may include one or more of the end-to-end Uu radio bearer identifier of the remote UE, ingress relay UE identifier of the uplink data/traffic of the remote UE at the last relay UE, PC5 hop ingress RLC channel information of the uplink data/traffic of the remote UE at the last relay UE, and (Uu) egress RLC channel information of the uplink data/traffic of the remote UE at the last relay UE. The ingress relay UE identifier may be one or more of the L2 destination ID, L2 source ID, and C-RNTI of the corresponding sidelink relay UE.

When the remote UE is connected to the base station through the "remote UE-first relay UE-intermediate relay UE-last relay UE-base station" path, the ingress relay UE identifier of the uplink data/traffic of the remote UE at the last relay UE may be the intermediate relay UE identifier. The PC5 hop ingress RLC channel information of the uplink data/traffic of the remote UE at the last relay UE may represent the logical channel identifier (LCID) of the PC5 RLC channel between the intermediate relay UE and the last relay UE. The (Uu) egress RLC channel information of uplink data/traffic of the remote UE at the last relay UE may represent the logical channel identifier (LCID) of the Uu RLC channel between the last relay UE and the base station.

As another example, the remote UE list configuration information indirectly connected to the last relay UE through the plurality of PC5 interfaces may include C-RNTI, which may be used as the remote UE identifier of the corresponding remote UE, and SRAP configuration information (or RRC configuration information) used for the remote UE. The SRAP configuration information used for the remote UE may include a local identifier for the remote UE used in the SRAP. The SRAP configuration information used for the remote UE may include bearer (e.g., radio bearer) identification information of the remote UE, mapping/mapping list information for the ingress link and/or ingress RLC channel, and egress link and/or egress RLC channel.

For example, it may include one or more of the end-to-end Uu radio bearer identifier of the remote UE, egress relay UE identifier of the downlink data/traffic of the remote UE at the last relay UE, PC5 hop egress RLC channel information of the downlink data/traffic of the remote UE at the last relay UE, and (Uu) ingress RLC channel information of the downlink data/traffic of the remote UE at the last relay UE.

The egress relay UE identifier may be one or more of the L2 destination ID, L2 source ID, and C-RNTI of the corresponding sidelink relay UE. When the remote UE is connected to the base station through the "remote UE-first relay UE-intermediate relay UE-last relay UE-base station" path, the egress relay UE identifier of the downlink data/traffic of the remote UE at the last relay UE may be the intermediate relay UE identifier. The PC5 hop egress RLC channel information of the downlink data/traffic of the remote UE at the last relay UE may represent the logical channel identifier (LCID) of the PC5 RLC channel between the intermediate relay UE and the last relay UE. The (Uu) ingress RLC channel information of downlink data/traffic of the remote UE at the last relay UE may represent the logical channel identifier (LCID) of the Uu RLC channel between the last relay UE and the base station.

As another example, the base station may distinguish the information configured in the last relay for relaying of the sidelink remote UE between uplink transmission and downlink transmission and configure it in the last relay UE through different configuration information.

As another example, the base station may configure it in the last relay UE through one (integrated/combined) configuration information without distinguishing the information configured in the last relay for relaying of the sidelink remote UE between uplink transmission and downlink transmission. Using the integrated/combined configuration information, the last relay UE may map the PC5 RLC channel between the intermediate relay UE and the last relay UE and the Uu RLC channel between the last relay UE and the base station. For example, it may configure the ingress/egress PC5 RLC channel information between the intermediate relay UE and the last relay UE and the ingress/egress Uu RLC channel information between the last relay UE and the base station. Accordingly, the last relay UE may map the ingress PC5 RLC channel between the intermediate relay UE and the last relay UE to the egress Uu RLC channel between the last relay UE and the base station for uplink data. Additionally, or alternatively the last relay UE may map the egress PC5 RLC channel between the last relay UE and the intermediate relay UE to the ingress Uu RLC channel between the base station and the last relay UE for downlink data.

As another example, the RRC message indicated by the base station for the sidelink relaying configuration may include lower relay UE list information for the last relay UE. The lower relay UE list information for the last relay UE may include the identifier of the corresponding sidelink relay UE (e.g., L2 destination ID, L2 source ID, C-RNTI, local UE identifier of the first relay UE, the intermediate relay UE, or the remote UE).

As described above, the present embodiments may effectively process the data transmitted and received between the sidelink relay UE and the remote UE.

Configurations of the last relay UE and the intermediate relay UE performing the above-described operations are briefly described again below. The remote UE and the base station may also be configured for the above-described multi-hop relay operation.

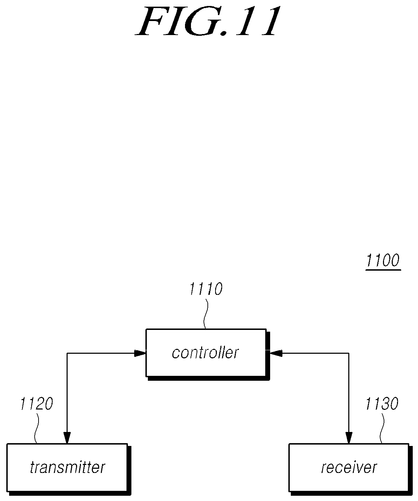

FIG. 11 is a block diagram illustrating an intermediate relay UE according to an embodiment.

Referring to FIG. 11, an intermediate relay UE 1100 performing data processing by providing a multi-hop relay operation in a sidelink network may include a receiver 1130 receiving configuration information for processing data for a remote UE from a parent relay UE, and a controller 1110 controlling the transfer of sidelink relay adaptation protocol (SRAP) data received from a receiving part of an SRAP entity on a PC5 interface to a transmitting part of the SRAP entity on the PC5 interface and determining an egress link or an egress RLC channel for transmitting the data to a child relay UE based on the configuration information.

For example, the configuration information may be included in a sidelink RRC message. The configuration information may include information for transferring/receiving data of a remote UE that is indirectly connected to a base station (connected through multi-hop relay).

For example, the configuration information may include at least one of local identifier information, radio bearer identifier information, PC5 interface uplink RLC channel ID information, and PC5 interface downlink RLC channel ID information. The configuration information may be provided by the base station to the last relay UE, and the last relay UE may transfer it to an intermediate relay UE. The configuration information may be the sidelink L2 relay UE configuration information (SL-L2RelayUE-Config) of the sidelink RRC message. For example, the configuration information may include a sidelink remote UE information element. The sidelink remote UE information element may include at least one of the above-described local identifier information, radio bearer identifier information, PC5 interface uplink RLC channel ID information, and PC5 interface downlink RLC channel ID information. Further, the configuration information may be received through various messages and information elements. The configuration information may include list information of SRAP configurations for a remote UE that is indirectly connected.

The controller 1110 may configure an SRAP entity to perform sidelink multi-hop relay operations based on the configuration information. The SRAP entity may be configured above an RLC entity to transfer the data of the remote UE to the entity that manages the sidelink relay adaptation protocol. For example, the SRAP entity may be configured below the PDCP entity and above the RLC entity. The controller 1110 may configure a PC5-SRAP entity to communicate with a parent relay UE and a child relay UE. The last relay UE may configure a PC5-SRAP entity for linkage with a child relay UE and a Uu-SRAP entity for linkage with a base station.

The controller 1110 may control the reception part of the PC5-SRAP entity to receive uplink or downlink data and transfer it to the transmitting part of the PC5-SRAP entity. The transmitting part of the PC5-SRAP entity transfers data to the parent relay UE in the case of uplink. In the case of downlink, the transmitting part of the PC5-SRAP entity transfers data to a child relay UE. To differentiate data transfer in a relay UE, the data is described as SRAP data.

For example, the controller 1110 may remove an SRAP header from SRAP data received at the receiving part of the SRAP entity and add an SRAP header including the same content as the removed SRAP header at the transmitting part of the SRAP entity.

For example, the receiving part of the SRAP entity may transfer an SRAP SDU to the transmitting part. The receiving part of the SRAP entity may remove the SRAP header when transferring the SRAP SDU. The transmitting part may add an SRAP header including the same content as that included in the SRAP data PDU header before it was removed. The transmitter 1120 may transfer the data with the SRAP header added to the parent relay UE or the child relay UE.

For example, the data transferred by the operation in the SRAP entity may be a data packet that does not correspond to SRBO of the remote UE. In other words, the above-described operations of the SRAP transmitting part and receiving part may be performed only when the data is not transferred through SRBO, where the header removal operation may be performed. Alternatively, the above-described operations may be performed without being limited to the transfer radio bearer of the data packet.

For example, if local identification information included in the configuration information and a UE identifier field of the SRAP data match for downlink data, the controller 1110 may determine an egress link on the PC5 interface corresponding to the child relay UE configured for the local identification information as the egress link for transmitting the data. For example, the controller 1110 may identify the value of the UE identifier field included in the header of SRAP data when downlink data is received. The controller 1110 may identify whether the value of the UE identifier field matches the local identifier information included in the configuration information. For example, the controller 1110 may identify whether the value of the UE identifier field is the same as the local identifier information. A plurality of pieces of local identifier information may be included according to the remote UE or SRAP entity. Therefore, it may be necessary to identify whether there is local identifier information matching the value of the UE identifier field.

When the value of the UE identifier field matches the local identifier information, the controller 1110 may determine the egress link on the PC5 interface corresponding to the child relay UE configured for the corresponding local identifier information as the egress link for downlink data transfer. The transmitter 1120 may transfer data using the determined egress link.

As another example, if local identification information included in the configuration information and a UE identifier field of the SRAP data match, the controller 1110 may determine an egress RLC channel configured for a combination of radio bearer identification information included in the configuration information and the local identification information as the egress RLC channel for transmitting the data.

For example, if the local identifier information included in the configuration information matches the UE identifier field value of the data, the radio bearer identifier information for the remote UE corresponding to the SRB ID or DRB ID determined by the bearer identifier field of the data may be included in the configuration information.

The controller 1110 may determine the egress RLC channel using the local identifier information and the radio bearer identifier information included in the configuration information. For example, the controller 1110 may select and determine the egress RLC channel (e.g., sl-egressRLC-ChannelPC5 or sl-egressRLC-Channel-DL) configured by mapping with the local identifier information and the radio bearer identifier information.

In other words, the controller 1110 may perform an operation for transferring data by mapping the PC5 RLC channel with the parent relay UE and the PC5 RLC channel with the child relay UE using at least one of the radio bearer identifier information and the local identifier information. The radio bearer identifier may be information for distinguishing the radio bearer of the remote UE.

Meanwhile, the child relay UE may, if a receiving part of an SRAP entity of the child relay UE receives uplink data corresponding to SRBO, transfer the uplink data to a transmitting part of the SRAP entity of the child relay UE, and the transmitting part of the SRAP entity of the child relay UE may add an SRAP header to the uplink data and transmit the uplink data.

For example, the child relay UE may be the first relay UE directly connected to the remote UE. As the first relay UE, the child relay UE may be connected to the remote UE and the intermediate relay UE. The SRAP receiving part of the child relay UE may receive uplink data corresponding to SRBO from the remote UE. The child relay UE transfers the received uplink data to the transmitting part. The transmitting part may add an SRAP header for transferring the uplink data and transfer it to the intermediate relay UE. In other words, if the child relay UE is the first relay UE, the transmitting part may add the SRAP header and transmit it without removing an existing SRAP header from the uplink data.

Further, the controller 1110 controls the overall operation of the intermediate relay UE 1100 based on data processing operation for the sidelink-based multi-hop relay operation necessary for performing the above-described disclosure.

The transmitter 1120 and the receiver 1130 are used to transmit/receive signals, messages, or data necessary for performing the above-described embodiments, with the relay UE, the remote UE, or the like.

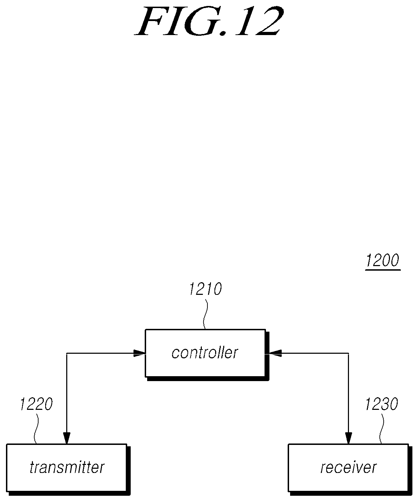

FIG. 12 is a block diagram illustrating a last relay UE according to an embodiment.

Referring to FIG. 12, a last relay UE 1200 performing data processing by providing a multi-hop relay operation in a sidelink network may comprise a receiver 1230 receiving configuration information for processing data for a remote UE from a base station, and a controller 1210 controlling to transfer sidelink relay adaptation protocol (SRAP) data received from a receiving part of an SRAP entity on a Uu interface to a transmitting part of the SRAP entity on a PC5 interface, for downlink data, and determining an egress link or an egress RLC channel for transmitting the downlink data to a child relay UE based on the configuration information.

As described above, the last relay UE means a relay UE connected to the base station through a Uu interface. The last relay UE is the first relay UE connected to the base station. The last relay UE is the parent relay UE from the perspective of the intermediate relay UE, and the intermediate relay UE is the child relay UE from the perspective of the last relay UE.

For example, the receiver 1230 receives the configuration information configured for the remote UE to receive data through the sidelink multi-hop relay operation from the base station.

For example, the configuration information may be included in an RRC message and may be received. Or, the configuration information may be included and received in a sidelink RRC message.

The configuration information may include information for transferring/receiving data of a remote UE that is indirectly connected to a base station (connected through multi-hop relay).

For example, the configuration information may include at least one of local identifier information, radio bearer identifier information, PC5 interface uplink RLC channel ID information, and PC5 interface downlink RLC channel ID information. The configuration information may be transferred by the base station to the last relay UE, and the last relay UE may transfer it to an intermediate relay UE. The configuration information may be the sidelink L2 relay UE configuration information (SL-L2RelayUE-Config) of the sidelink RRC message. For example, the configuration information may include a sidelink remote UE information element. The sidelink remote UE information element may include at least one of the above-described local identifier information, radio bearer identifier information, PC5 interface uplink RLC channel ID information, and PC5 interface downlink RLC channel ID information. Further, the configuration information may be received through various messages and information elements. The configuration information may include list information of SRAP configurations for a remote UE that is indirectly connected.

The controller 1210 may configure an SRAP entity to perform sidelink multi-hop relay operations based on the configuration information. The SRAP entity may be configured above an RLC entity to transfer the data of the remote UE to the entity that manages the sidelink relay adaptation protocol. For example, the SRAP entity may be configured below the PDCP entity and above the RLC entity. The controller 1210 may configure a PC5-SRAP entity for linkage with a child relay UE and a Uu-SRAP entity for linkage with a base station.

For example, the controller 1210 may remove an SRAP header from SRAP data received at the receiving part of the SRAP entity and add the same content as that included in the removed SRAP header at the transmitting part of the SRAP entity.

For example, the receiving part of the SRAP entity may transfer an SRAP SDU to the transmitting part. The receiving part of the SRAP entity may remove the SRAP header when transferring the SRAP SDU. The transmitting part may add an SRAP header including the same content as that included in the SRAP data PDU header before it was removed. The transmitter 1220 may transfer the data with the SRAP header added to the intermediate relay UE or the base station.

For example, the data transferred by the operation in the SRAP entity may be a data packet that does not correspond to SRBO of the remote UE. In other words, the above-described operations of the SRAP transmitting part and receiving part may be performed only when the data is not transferred through SRBO, and the header removal operation may be performed. Alternatively, the above-described operations may be performed without being limited to the transfer radio bearer of the data packet.

For example, if local identification information included in the configuration information and a UE identifier field of the SRAP data match, the controller 120 may determine an egress link on the PC5 interface corresponding to the child relay UE configured for the local identification information as the egress link for transmitting the downlink data. For example, the controller 1210 may identify the value of the UE identifier field included in the header of SRAP data when downlink data is received. The controller 1210 may identify whether the value of the UE identifier field matches the local identifier information included in the configuration information. For example, the controller 1210 may identify whether the value of the UE identifier field is the same as the local identifier information. A plurality of pieces of local identifier information may be included according to the remote UE or SRAP entity. Therefore, it may be necessary to identify whether there is local identifier information matching the value of the UE identifier field.

When the value of the UE identifier field matches the local identifier information, the controller 1210 may determine the egress link on the PC5 interface corresponding to the child relay UE configured for the corresponding local identifier information as the egress link for downlink data transfer. The transmitter 1220 may transfer data to the intermediate relay UE using the determined egress link.

As another example, if local identification information included in the configuration information and a UE identifier field of the SRAP data match, the controller 1210 may determine an egress RLC channel configured for radio bearer identification information included in the configuration information and the local identification information as the egress RLC channel for transmitting the downlink data.

For example, if the local identifier information included in the configuration information matches the UE identifier field value of the data, the radio bearer identifier information for the remote UE that matches the SRB ID or DRB ID determined by the bearer identifier field of the data may be included in the configuration information.

The controller 1210 may determine the egress RLC channel using the local identifier information and the radio bearer identifier information included in the configuration information. For example, the controller 1210 may select and determine the egress RLC channel (e.g., sl-egressRLC-ChannelPC5 or sl-egressRLC-Channel-DL) configured by mapping with the local identifier information and the radio bearer identifier information.

In other words, the controller 1210 may perform an operation for transferring data by mapping the PC5 RLC channel with the intermediate relay UE using at least one of the radio bearer identifier information and the local identifier information. The radio bearer identifier may be information for distinguishing the radio bearer of the remote UE.

Meanwhile, if a receiving part of an SRAP entity of the child relay UE receives uplink data corresponding to SRBO, the child relay UE may transfer the uplink data to a transmitting part of the SRAP entity of the child relay UE, and the transmitting part of the SRAP entity of the child relay UE may add an SRAP header to the uplink data and transmit the uplink data.

For example, the child relay UE may be the first relay UE directly connected to the remote UE. As the first relay UE, the child relay UE may be connected to the remote UE and the intermediate relay UE. The SRAP receiving part of the child relay UE may receive uplink data corresponding to SRBO from the remote UE. The child relay UE transfers the received uplink data to the transmitting part. The transmitting part may add an SRAP header for transferring the uplink data and transfer it to the intermediate relay UE. In other words, if the child relay UE is the first relay UE, the transmitting part may add the SRAP header and transmit it without removing the SRAP header from the uplink data.

Further, the controller 1210 controls the overall operation of the last relay UE 1200 based on data processing operation for the sidelink-based multi-hop relay operation necessary for performing the above-described disclosure.

The transmitter 1220 and the receiver 1230 are used to transmit/receive signals, messages, or data necessary for performing the above-described disclosure, with the relay UE, the base station, the remote UE, or the like.

Further, the base station may include a controller, a transmitter, and a receiver.

The controller controls the overall operation of the base station to support data transmission/reception operation through a sidelink multi-hop relay operation necessary to perform the present embodiments described above.

The transmitter and the receiver are used to transmit/receive signals, messages, or data necessary for performing the above-described embodiments, with the relay UE, the remote UE, or the like.

Further, the remote UE may also include a receiver, a controller, and a transmitter.

The receiver receives downlink control information and data or messages from the relay UE or the base station through a corresponding channel.

Further, the controller controls the overall operation of the remote UE based on the data processing operation for a sidelink multi-hop relay operation.

The transmitter transmits uplink control information, data, and messages to the relay UE and the base station through a corresponding channel.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for data processing of an intermediate relay user equipment (UE) providing a multi-hop relay operation in a sidelink network, the method comprising:
receiving configuration information for processing data for a remote UE from a parent relay UE;
controlling transfer of sidelink relay adaptation protocol (SRAP) data received from a receiving part of an SRAP entity on a PC5 interface to a transmitting part of the SRAP entity on the PC5 interface; and
determining an egress link or an egress RLC channel for transmitting the data to a child relay UE based on the configuration information.

2. The method of claim 1, wherein the configuration information includes at least one of local identifier information, radio bearer identification information, PC5 interface uplink RLC channel ID information, and PC5 interface downlink RLC channel ID information.

3. The method of claim 1, wherein the controlling comprises removing an SRAP header from the SRAP data received from the receiving part of the SRAP entity and adding an SRAP header including the same content as that of the removed SRAP header at the transmitting part of the SRAP entity.

4. The method of claim 1, wherein the determining an egress link or an egress RLC channel comprises:
if local identification information included in the configuration information and a UE identifier field of the SRAP data match for downlink data, determining an egress link on the PC5 interface corresponding to the child relay UE configured for the local identification information as the egress link for transmitting the data.

5. The method of claim 1, wherein the determining an egress link or an egress RLC channel comprises:
if local identification information included in the configuration information and a UE identifier field of the SRAP data match, determining an egress RLC channel configured for radio bearer identification information included in the configuration information and the local identification information as the egress RLC channel for transmitting the data.

6. The method of claim 1, wherein if a receiving part of an SRAP entity of the child relay UE receives uplink data corresponding to SRBO, the child relay UE transfers the uplink data to a transmitting part of the SRAP entity of the child relay UE, and the transmitting part of the SRAP entity of the child relay UE adds an SRAP header to the uplink data and transmits the uplink data.

7. A method for data processing of a last relay UE providing a multi-hop relay operation in a sidelink network, the method comprising:
receiving configuration information for processing data for a remote UE from a base station;
controlling to transfer sidelink relay adaptation protocol (SRAP) data received from a receiving part of an SRAP entity on a Uu interface to a transmitting part of the SRAP entity on a PC5 interface, for downlink data; and
determining an egress link or an egress RLC channel for transmitting the downlink data to a child relay UE based on the configuration information.

8. The method of claim 7, wherein the configuration information includes at least one of local identifier information, radio bearer identifier information, PC5 interface uplink RLC channel ID information, and PC5 interface downlink RLC channel ID information.

9. The method of claim 7, wherein the controlling comprises:
removing an SRAP header from the SRAP data received from the receiving part of the SRAP entity and adding an SRAP header including the same content as content included in the SRAP header removed from the transmitting part of the SRAP entity.

10. The method of claim 7, wherein the determining an egress link or an egress RLC channel comprises:
if local identification information included in the configuration information and a UE identifier field of the SRAP data match, determining an egress link on the PC5 interface corresponding to the child relay UE configured for the local identification information as the egress link for transmitting the downlink data.

11. The method of claim 7, wherein determining an egress link or an egress RLC channel comprises:
if local identification information included in the configuration information and a UE identifier field of the SRAP data match, determining an egress RLC channel configured for radio bearer identification information included in the configuration information and the local identification information as the egress RLC channel for transmitting the downlink data.

12. An intermediate relay UE performing data processing by providing a multi-hop relay operation in a sidelink network, comprising:
a receiver receiving configuration information for processing data for a remote UE from a parent relay UE; and
a controller controlling to transfer sidelink relay adaptation protocol (SRAP) data received from a receiving part of an SRAP entity on a PC5 interface to a transmitting part of the SRAP entity on the PC5 interface and
determining an egress link or an egress RLC channel for transmitting the data to a child relay UE based on the configuration information.

13. The intermediate relay UE of claim 12, wherein the configuration information includes at least one of local identifier information, radio bearer identifier information, PC5 interface uplink RLC channel ID information, and PC5 interface downlink RLC channel ID information.

14. The intermediate relay UE of claim 12, wherein the controller removes an SRAP header from the SRAP data received from the receiving part of the SRAP entity and adds an SRAP header including the same content as content included in the SRAP header removed from the transmitting part of the SRAP entity.

15. The intermediate relay UE of claim 12, wherein the controller, if local identification information included in the configuration information and a UE identifier field of the SRAP data match for downlink data, determines an egress link on the PC5 interface corresponding to the child relay UE configured for the local identification information as the egress link for transmitting the data.
